# EUROPÄISCHE PATENTSCHRIFT

(11) **EP 2 029 905 B1**
(45) Veröffentlichungstag und Bekanntmachung des Hinweises auf die Patenterteilung: **29.12.2010**
(21) Anmeldenummer: 07725515.6
(22) Anmeldetag: 24.05.2007
(51) Int. Cl.: F16C 17/02, F16C 33/14

(54) **GEROLLTE GLEITLAGERBUCHSE**
ROLLED PLAIN BEARING BUSH
DOUILLE DE PALIER LISSE LAMINÉE

(30) Priorität: 20.06.2006 DE 102006028272
(43) Veröffentlichungstag der Anmeldung: 04.03.2009
(73) Patentinhaber: KS Gleitlager GmbH, 68789 St. Leon-Rot (DE)
(72) Erfinder: BACK, Karl, 69234 Diehlheim (DE)
(74) Vertreter: Friz, Oliver
(86) Internationale Anmeldenummer: PCT/EP2007/004617
(87) Internationale Veröffentlichungsnummer: WO 2007/147476

(56) Entgegenhaltungen:
- DE-A1- 2 913 708
- DE-A1- 4 411 214
- DE-C- 546 781
- DE-C1- 4 239 938
- US-A- 3 687 181

## Beschreibung

Die Erfindung betrifft eine "gerollte" Gleitlagerbuchse, also eine Gleitlagerbuchse mit einer Stoßfuge, die durch Hindurchführen eines Ziehdorns unter Festhalten des Außenumfangs kalibriert ist.

Üblicherweise wird bei der Herstellung von Buchsen einer Wandstärke von ca. 0,75 bis 3 mm, insbesondere von 0,75 bis 1,5 mm, mit einer Kalibrierzugabe von ca. 10 bis 30 µm, insbesondere von ca. 20 µm gearbeitet, was auch in der Größenordnung der Banddickentoleranz des verwandten Flachmaterials liegt. Das heißt die Wanddicke des Flachmaterials weist ein Übermaß in dieser Größenordnung auf oder anders ausgedrückt der Innendurchmesser des auf Buchsenform gebrachten Flachmaterialabschnitts weist ein Untermaß in dieser Größenordnung auf. Da bei Kalibriervorgängen der beschriebenen Art der Außenumfang in dem Kalibrierwerkzeug (Kalibriermatrize) exakt vorgegeben und damit festgehalten wird, muss die beim Hindurchführen des Ziehdorns sich ergebende Materialverdrängung in Breitenrichtung, also in axialer Richtung der gerollten Gleitlagerbuchse erfolgen. Man hat also in der Folge eine undefinierte Buchsenbreite, die möglicherweise durch eine erneute, insbesondere spanabhebende Bearbeitung wiederum korrigiert werden muss, was aufwändig ist.

US-A-2,905,511 zeigt eine 180° umfassende Gleitlagerschale, die an ihrem Außenumfang mit einer Vielzahl von regelmäßigen oder unregelmäßigen Vertiefungen versehen ist, wonach bei einer Ausführungsform in Umfangsrichtung erstreckte Nuten vorgesehen sind. Die Vertiefungen dienen dazu, im Betrieb der Gleitlagerschale auftretende extreme Belastungen besser aufnehmen und ausgleichen zu können. Solche Situationen ergeben sich, wenn die gelagerte Welle einen Fluchtungsfehler aufweist. Bei Gleitlagerschalen stellt sich das Problem der Kalibrierung durch Hindurchführen eines Ziehdorns nicht. Lagerschalen werden allenfalls spanabhebend geräumt.

Der vorliegenden Erfindung liegt die Aufgabe zu Grunde, dem vorstehend geschilderten Problem bei der Kalibrierung gerollter Gleitlagerbuchsen zu begegnen.

Diese Aufgabe wird erfindungsgemäß gelöst durch eine Gleitlagerbuchse mit einer Mehrzahl von an ihrem Außenumfang vorgesehenen in Umfangsrichtung verlaufenden Rillen, die keilförmig oder V-förmig ausgebildet sind, so dass sie eine Materialverdrängung im Zuge des Kalibrierens der Gleitlagerbuchse durch Hindurchführen eines Ziehdorns unter Festhalten des Außenumfangs aufzunehmen vermögen, indem sie sich zumindest teilweise schließen oder verengen.

Die erfindungsgemäß vorgesehenen makroskopischen Rillen verlaufen dabei also in jeweils einer Ebene, die senkrecht zur Zugrichtung des Ziehdorns verläuft. Die Rillen verlaufen also vorzugsweise exakt in Umfangsrichtung, also konzentrisch zur Längsmittelachse der Gleitlagerbuchse. Die Rillen bilden also gewissermaßen ein Reservoir zur Aufnahme von Materialdeformationen im Zuge der Kalibrierung, wodurch der Materialfluß über die vorgegebene Buchsenbreite hinaus reduziert oder gar ganz verhindert werden kann. Dabei werden die Rillen wenigstens teilweise geschlossen oder zumindest verengt. Hindurchziehen des Ziehdorns bedeutet Bewegung des Dorns und/oder der Buchse relativ zueinander in axialer Richtung.

Es erweist sich als besonders zweckmäßig, dass die Rillen sich nach innen hin verjüngen und keilförmig oder V-förmig ausgebildet sind, da sie solchenfalls einen geringeren Widerstand gegen eine Materialverdrängung aufweisen, also sich bei verdrängender Verformung leichter schließen, was ja erfindungsgemäß erwünscht ist.

Die Flanken der Rillen sind vorteilhafterweise so ausgebildet, dass sie mit der radialen Ebene einen Winkel von 20° bis 40°; insbesondere 20° bis 25° bilden. Der gesamte Öffnungswinkel der Rillen ist entsprechend doppelt so groß (wenn die Flanken denselben Neigungswinkel aufweisen).

Die Rillen weisen vorteilhafterweise eine Tiefe von 0,05 bis 0,5 mm bei üblichen Wandstärken des Flachmaterials von ca. 0,75 bis 3 mm auf. In vorteilhafter Weise weisen die Rillen eine Tiefe von 5 bis 25 % der Wandstärke der Buchse auf.

Es hat sich des Weiteren als zweckmäßig erwiesen, wenn die Rillen in einem axialen Abstand von 1 bis 3 mm, insbesondere 1 bis 2 mm voneinander beabstandet sind.

Die Erfindung betrifft auch ein Verfahren zum Herstellen und Kalibrieren einer gerollten Gleitlagerbuchse mit den Merkmalen des Anspruchs 6.

Herstellungstechnisch erweist es sich als vorteilhaft, wenn die Rillen durch Abrollen eines Werkzeugs über dem in Maschinenrichtung zugeführten Flachmaterialband eingeprägt werden. Grundsätzlich wäre auch eine spanabhebende Einbringung der Rillen denkbar; dies erweist sich jedoch als herstellungstechnisch aufwändiger und bringt überraschenderweise keine Vorteile mit sich. Es hat sich nämlich gezeigt, dass geprägte Rillen sich ebenso gut als Reservoir zur Aufnahme verdrängten Materials eignen.

Wie bereits erwähnt, werden die Rillen vorzugsweise sich verjüngend, insbesondere keilförmig oder V-förmig ausgebildet.

Die Erfindung erweist sich durch Vorsehen der erfindungsgemäßen makroskopischen Rillen als Reservoir zur Aufnahme verformten Materials insofern als besonders vorteilhaft, als beim Kalibrieren zusätzlich zum Außenumfang auch die Buchsenbreite durch Stützflanken im Werkzeug festgehalten werden kann, da die Materialverdrängung beim Hindurchführen des Ziehdorns vollständig in die Rillen geleitet wird. Es kann also durch einen einzigen Kalibrierschritt eine freifallende und sogleich verwendbare gerollte Gleitlagerbuchse erhalten werden, die keiner weiteren maßgebenden Bearbeitung bedarf.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der erfindungsgemäßen Gleitlagerbuchse. In der Zeichnung zeigt:
- Figur 1: eine perspektivische Ansicht einer erfindungsgemäßen Gleitlagerbuchse (nicht maßstabsgetreu) und
- Figur 2: eine Schnittansicht mit Schnittebene II-II in Figur 1 (nicht maßstabsgetreu).

Die Figuren zeigen die Ausbildung einer erfindungsgemäßen "gerollten" Gleitlagerbuchse 2 mit einer demzufolge resultierenden Stoßfuge der Buchse, die im eingepressten Zustand der Buchse geschlossen ist. Bei Gleitlagerbuchsen der hier interessierenden Art handelt es sich vorzugsweise um aus einem metallischen Gleitlagerverbundwerkstoff hergestellte Gleitlagerbuchsen. Der metallische Gleitlagerverbundwerkstoff umfasst zumeist einen Träger oder Rücken aus Stahl, Bronze, Aluminium oder Messing, auf den dann die metallische Gleitlagerlegierung unlösbar aufgebracht, insbesondere aufgesintert, aufgegossen oder aufgewalzt ist. Auch Gleitlagerverbundwerkstoffe mit einem polameren Gleitschichtmaterial, welches zumeist in eine poröse Trägerschicht einimprägniert ist, sind von der Erfindung erfasst. Der Gleitlagerverbundwerkstoff wird auf Rollenform gebracht und als vorzugsweise endloses Band einer Herstellungsmaschine zugeführt. In der Herstellungsmaschine werden Längsabschnitte von dem Band abgetrennt und auf Buchsenform "gerollt".

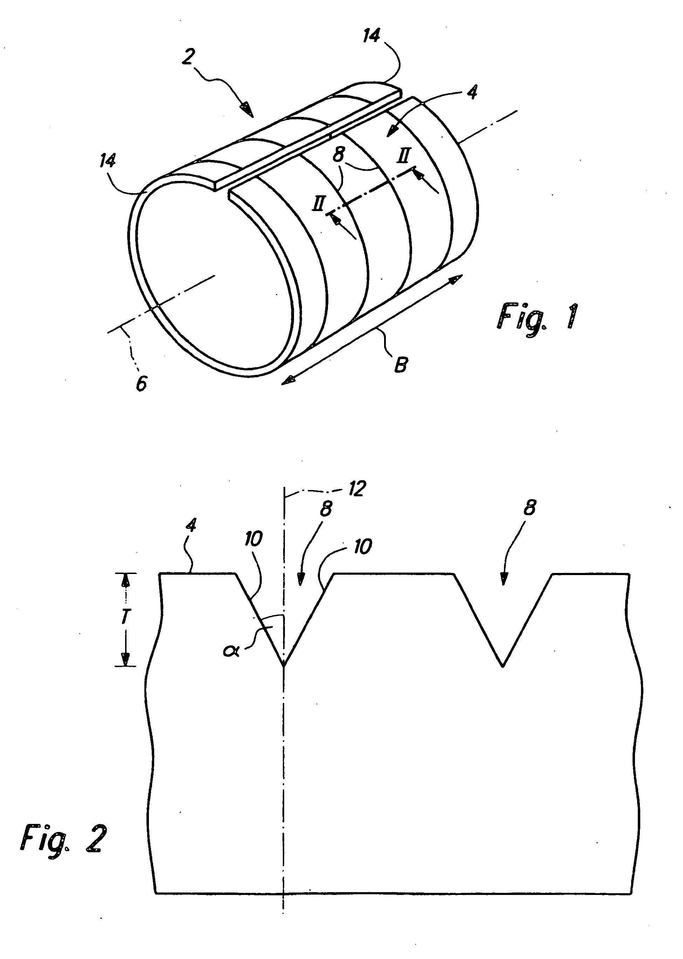

Die Gleitlagerbuchse 2 weist an ihrem Außenumfang 4 mehrere zueinander parallele und konzentrisch zu einer Längsmittelachse 6 der Gleitlagerbuchse verlaufende Rillen 8 auf. Hierbei handelt es sich um makroskopische Rillen mit einer Tiefe von ca. 0,05 bis 0,5 mm. Die in Figur 2 beispielhaft dargestellten Rillen 8 verjüngen sich, und ihre Flanken 10 laufen spitzwinklig aufeinander zu. Die Rillen sind im Querschnitt V-förmig ausgebildet. Ihre Flanken 10 bilden mit einer angedeuteten radialen Ebene 12 einen Winkel α von 20° bis 40°, insbesondere von 25° bis 35°. Im dargestellten Fall sind die Rillen 8 beziehungsweise deren Flanken 10 symmetrisch zu der radialen Ebene 12 ausgebildet; dies ist aber nicht zwingend erforderlich. Es wäre auch denkbar, dass die Flanken 10 unterschiedlichen Neigungswinkel α zur radialen Ebene 12 aufweisen.

Wenn beim Kalibrieren der Gleitlagerbuchse 2 ein Ziehdorn in Richtung der Längsmittelachse 6 der Gleitlagerbuchse 2 durch diese hindurchgeführt wird, so kommt es zu einer verdrängenden Materialverformung. Da der Außenumfang der Gleitlagerbuchse 2 in dem Kalibrierwerkzeug festgehalten ist, wird zumindest ein Teil der verdrängenden Verformung in die Rillen 8 "gehen". Die Rillen 8 stellen also gewissermaßen ein Reservoir zur Aufnahme verdrängender Materialverformung im Zuge des Kalibrierens dar. Da der Ziehdorn und die Gleitlagerbuchse relative zueinander in axialer Richtung bewegt werden (Bewegung des Dorns und/oder der Buchse relativ zueinander in axialer Richtung), wird die verdrängende Verformung überwiegend in axialer Richtung erfolgen. Die Rillen 8 werden also verengt und wenigstens teilweise geschlossen. Zusätzlich kann in vorteilhafter Weise beim Kalibrieren die Buchsenbreite B durch Anlegen von Stützflanken an die Stirnseiten 14 der Gleitlagerbuchse 2 exakt festgehalten werden.

Insgesamt kann eine freifallende und ohne weitere bemaßende Bearbeitung verwendbare Gleitlagerbuchse erhalten werden.

## Patentansprüche

1. Gerollte Gleitlagerbuchse (2) mit einer Mehrzahl von an ihrem Außenumfang (4) vorgesehenen in Umfangsrichtung verlaufenden Rillen (8), die keilförmig oder V-förmig ausgebildet sind, so dass sie eine Materialverdrängung im Zuge des Kalibrierens der Gleitlagerbuchse (2) durch Hindurchführen eines Ziehdorns unter Festhalten des Außenumfangs (4) aufzunehmen vermögen, indem sie sich zumindest teilweise schließen oder verengen.

2. Gleitlagerbuchse nach Anspruch 1, **dadurch gekennzeichnet, dass** die Flanken (10) der Rillen (8) mit der radialen Ebene einen Winkel (α) von 20 - 40°, insbesondere 25 - 35° bilden.

3. Gleitlagerbuchse nach einem der vorstehenden Ansprüche, **dadurch gekennzeichnet, dass** die Rillen (8) eine Tiefe (T) von 0,05 - 0,5 mm aufweisen.

4. Gleitlagerbuchse nach einem der vorstehenden Ansprüche, dass die Rillen (8) eine Tiefe (T) von 5 - 25 % der Wandstärke der Buchse aufweisen.

5. Gleitlagerbuchse nach einem der vorstehenden Ansprüche, dass die Rillen (8) in Längsrichtung (6) einen Abstand von 1 - 3 mm, insbesondere von 1 - 2 mm voneinander aufweisen.

6. Verfahren zum Herstellen und Kalibrieren einer gerollten Gleitlagerbuchse (2), wobei von einem in Maschinenrichtung zugeführten Flachmaterialband Längsabschnitte abgetrennt und auf Buchsenform gebracht werden und wobei unter Festhalten des Außenumfangs die Innenseite der Gleitlagerbuchse (2) durch Hindurchführen eines Ziehdorns kalibriert wird, **dadurch gekennzeichnet, dass** bei dem in Maschinenrichtung zugeführten Flachmaterialband oder bei hiervon abgetrennten Längsabschnitten auf der die spätere Außenumfangsfläche der Gleitlagerbuchse (2) bildenden Seite in der Maschinenrichtung mehrere Rillen (8) eingebracht werden und dass beim anschließenden Kalibrieren die Rillen (8) in Folge von Materialverformung teilweise geschlossen oder verengt werden.

7. Verfahren nach Anspruch 6, **dadurch gekennzeichnet, dass** die Rillen (8) durch Abrollen eines Werkzeugs eingeprägt werden.

8. Verfahren nach Anspruch 6 oder 7, **dadurch gekennzeichnet, dass** die Rillen (8) keilförmig oder V-förmig ausgebildet werden.

9. Verfahren nach Anspruch 6, 7 oder 8, **dadurch gekennzeichnet, dass** beim Kalibrieren die Buchsenbreite (B) durch Stützflanken im Werkzeug festgehalten wird.

## Claims

1. Rolled plain bearing bush (2) comprising a plurality of grooves (8) which are provided on its outer periphery (4), extend in the peripheral direction, and have a wedge-shaped or V-shaped design, such that they can accept the material displaced in the course of calibration of the plain bearing bush (2) by passing a mandrel through it while the outer periphery (4) is fixedly held in that they are at least partially closed or narrowed.

2. Plain bearing bush according to claim 1, **characterized in that** the flanks (10) of the grooves (8) form an angle (α) of 20 to 40°, in particular 25 to 35°, with respect to the radial plane.

3. Plain bearing bush according to any one of the preceding claims, **characterized in that** the grooves (8) have a depth (T) of 0,05 to 0,5 mm.

4. Plain bearing bush according to any one of the preceding claims, **characterized in that** the grooves (8) have a depth (T) of 5 to 25 % of the wall thickness of the bush.

5. Plain bearing bush according to any one of the preceding claims, **characterized in that** the grooves (8) have a separation from each other in the longitudinal direction (6) of 1 to 3 mm, in particular 1 to 2 mm.

6. Method for producing and calibrating a rolled plain bearing bush (2), wherein longitudinal sections are separated from a sheet material band that is supplied in the machine direction, and are formed into a bush shape, and wherein the inner side of the plain bearing bush (2) is calibrated through passage of a mandrel while the outer periphery is fixedly held, **characterized in that** several grooves (8) are introduced into the sheet material band supplied in the machine direction or into longitudinal sections separated therefrom, on that side, that forms the later outer peripheral surface of the plain bearing bush (2), and **in that** during subsequent calibration, the grooves (8) are partially closed or narrowed due to material deformation.

7. Method according to claim 6, **characterized in that** the grooves (8) are embossed by rolling a tool.

8. Method according to claim 6 or 7, **characterized in that** the grooves (8) are formed to have a wedge-shaped or V-shaped design.

9. Method according to claim 6, 7 or 8, **characterized in that**, during calibration, the bush width (B) is fixed in the tool by supporting flanks.

## Revendications

1. Coussinet lisse enroulé (2) doté d'une pluralité de nervures circonférentielles (8) pratiquées selon une forme de coin ou de V sur son pourtour externe (4), de façon que lesdites rainures puissent absorber la matière refoulée lors du calibrage du coussinet lisse (2) par introduction d'un mandrin d'étirage sous immobilisation du pourtour externe (4), grâce au fait que lesdites rainures se rétrécissent ou se ferment au moins partiellement.

2. Coussinet lisse selon la revendication 1, **caractérisé en ce que** les flancs (10) des rainures (8) forment, avec le plan radial, un angle (α) compris entre 20 et 40°, en particulier entre 25 et 35°.

3. Coussinet lisse selon l'une quelconque des revendications précédentes, **caractérisé en ce que** les rainures (8) ont une profondeur (T) comprise entre 0,05 et 0,5 mm.

4. Coussinet lisse selon l'une quelconque des revendications précédentes, **caractérisé en ce que** les rainures (8) ont une profondeur (T) comprise entre 5 et 25 % de l'épaisseur de paroi du coussinet.

5. Coussinet lisse selon l'une quelconque des revendications précédentes, **caractérisé en ce que** les rainures (8) sont espacées les unes des autres, dans la direction longitudinale (6), de 1 à 3 mm, en particulier de 1 à 2 mm.

6. Procédé de production et de calibrage d'un coussinet lisse enroulé (2), dans lequel des tronçons longitudinaux sont découpés dans un feuillard alimenté dans le sens machine et travaillés selon une forme de coussinet et dans lequel la face interne du coussinet lisse (2) est calibrée au moyen d'un mandrin d'étirage sous immobilisation du pourtour externe, **caractérisé en ce que** sur le feuillard alimenté en sens machine ou sur les tronçons longitudinaux découpés dans ledit feuillard, il est ménagé une pluralité de rainures (8) dans le sens machine sur la face destinée à devenir la face externe du coussinet lisse (2), et **en ce que**, lors du calibrage qui s'ensuit, lesdites rainures (8) sont rétrécies voire partiellement fermées sous l'effet de la déformation de la matière.

7. Procédé selon la revendication 6, **caractérisé en ce que** les rainures (8) sont obtenues par déformation sous la pression d'un outil rotatif.

8. Procédé selon la revendication 6 ou la revendication 7, **caractérisé en ce que** les rainures (8) affectent la forme d'un coin ou d'un V.

9. Procédé selon l'une des revendications 6, 7 et 8, **caractérisé en ce que** la largeur de coussinet (B) est conservée lors du calibrage grâce à des flancs d'appui prévus à l'intérieur de l'outil.
